# EUROPÄISCHE PATENTANMELDUNG

(11) **EP 2 511 624 A2**
(43) Veröffentlichungstag der Anmeldung: **17.10.2012**
(21) Anmeldenummer: 12002551.5
(22) Anmeldetag: 10.04.2012
(51) Int. Cl.: F24J 2/52

(54) **Pofilelement zur Befestigung von Solarmodulen**

(30) Priorität: 13.04.2011 DE 202011005202 U
(71) Anmelder: VM Edelstahltechnik GmbH, 58840 Plettenberg (DE)
(72) Erfinder: Mächtle, Daniel, 58840 Plettenberg (DE)
(74) Vertreter: Jakelski, Joachim

(57) **Zusammenfassung**

Bei einem Profilelement (100) zur Befestigung von Solarmodulen (200), insbesondere Fotovoltaikmodulen, mit einem Träger (110), an dessen einer Seite ein, einem Solarmodul (200) zugewandter Auflagebereich (120) angeordnet ist und an dessen unterer, dem Solarmodul (200) abgewandten Seite ein Befestigungsbereich (130) angeordnet ist, weist der Befestigungsbereich (130) wenigstens ein in Längsrichtung des Profilelements (100) wirkendes Anschlagelement (160) auf.

## Beschreibung

Die Erfindung betrifft ein Profilelement zur Befestigung von Solarmodulen, insbesondere Fotovoltaikelementen nach dem Oberbegriff des Anspruchs 1.

### Stand der Technik

Solarmodule, insbesondere Fotovoltaikelemente zur Stromerzeugung, die auf Dächern montiert werden, weisen sehr häufig einen das Fotovoltaikelement umschließenden Rahmen auf. Das Entsprechende gilt auch für solarthermische Module. Dabei erweist sich der am Rande umlaufende Rahmen als störender Schmutzfänger. Beispielsweise läuft Regenwasser aufgrund dieses Rahmens und der Schräganordnung der Solarmodule nicht vollständig ab, sodass am unteren Ende des Rahmens aufgrund der Schrägstellung der Solarmodule sehr oft Stauwasser gebildet wird, welches trüb sein kann und Schmutzränder hinterlässt, die die Sonneneinstrahlung beeinträchtigen.

Ein fotovoltaisches Solarzellenmodul mit einem derartigen Rahmen geht beispielsweise aus der EP 0 500 066 B1 hervor.

Ein elektrothermisches Solarmodul mit einem umlaufenden Rahmen ist aus der DE 20 2006 018 592 U1 bekannt geworden.

Ein Solarmodul, das mittels einer Klebeverbindung an einem Profilelement befestigbar ist, geht aus der DE 20 2010 000 940 U1 hervor. Das Solarmodul wird dabei mittels eines Auflagebereichs und eines Klebebereichs befestigt, die durch eine, dem Solarmodul zugewandte U-förmige Nut gebildet werden, wobei der dem Solarmodul zugewandte U-Schenkel eine etwas geringere Höhe aufweist und so eine Auflage für die Solarzelle bildet, während der der Solarzelle abgewandte U-Schenkel eine Höhe aufweist, die der (kleineren) Höhe des dem Solarmodul zugewandten Schenkels plus der Dicke des Solarmoduls entspricht. Diese Ausbildung des Auflage- und Klebebereichs ermöglicht ein bündiges Abschließen des Solarmoduls und des Profilelements ohne überstehenden Rand und damit ohne Schutzfänger. An seinem unteren, dem Solarmodul abgewandten Ende weist das Profilelement eine Befestigungsnut auf, in die zur Befestigung ein vorzugsweise klemmendes Befestigungselement eingreift.

Aufgrund der Klebeverbindungen sind das Solarmodul und das Profilelement unlöslich miteinander verbunden und müssen als ein Teil auf Dächern gehandhabt werden. Dabei kann es insbesondere bei einer Befestigung auf Dächern mit großer Dachschräge vorkommen, dass das Profilelement und das Solarmodul während des Montagevorgangs entlang der Dachschräge abrutschen. Der Erfindung liegt daher die Aufgabe zugrunde, ein gattungsgemäßes Profilelement dahingehend weiterzubilden, dass ein Abrutschen auch bei Dächern mit großer Dachschräge verhindert wird.

### Offenbarung der Erfindung

### Vorteile der Erfindung

Diese Aufgabe wird durch ein Profilelement zur Befestigung von Solarmodulen der eingangs beschriebenen Art dadurch gelöst, dass der Befestigungsbereich wenigstens ein in Längsrichtung des Profilelements wirkendes Anschlagelement aufweist. Dieses Anschlagelement verhindert ein Abrutschen des Verbunds aus Solarmodul und Profilelement.

Das Solarmodul wird zunächst auf dem Auflagebereich mittels einer Klebeverbindung befestigt. Nachdem dieser Schritt erfolgt ist, wird es zusammen mit dem Profilelement auf dem Dach befestigt. Der Monteur muss dabei zum Teil auch großflächige Solarmodule, an deren Rändern die Profilelemente befestigt sind, handhaben. Dabei muss er Klemmelemente in den Befestigungsbereich einbringen und diese, nachdem das Solarelement auf dem Dach ausgerichtet ist, auf an sich bekannte Weise beispielsweise mittels einer Schraubverbindung fixieren. Während der Montage greifen die Klemmelemente - zunächst ohne eine Klemmkraft auszuüben - in den Befestigungsbereich ein. Dabei können die Solarelemente in Gefällerichtung des Daches abrutschen. Die Anschlagelemente verhindern ein Herunterfallen von dem Dach. Die Solarmodule werden vielmehr in der Anschlagsposition sicher auf dem Dach gehalten. Nach erfolgter Ausrichtung und Positionierung können die Solarmodule durch Fixieren der Klemmelemente sicher auf dem Dach befestigt werden.

Das Profilelement ist im Wesentlichen dreiteilig ausgebildet. Es weist einen Auflagebereich, der der Klebeverbindung mit dem Solarmodul dient, einen Träger und den Befestigungsbereich auf. Der Träger kann rein prinzipiell auf die unterschiedlichste Art und Weise ausgebildet sein. Eine sehr vorteilhafte Ausführungsform, die insbesondere eine hohe Stabilität aufweist, sieht vor, dass der Träger quaderförmig ausgebildet ist und einen rechteckigen, insbesondere quadratischen, Querschnitt aufweist. Eine solche quaderförmige Ausbildung ermöglicht auch die Positionierung eines großflächigen Auflagebereichs.

Dabei ist gemäß einer vorteilhaften Ausgestaltung vorgesehen, dass der Auflagebereich den quaderförmigen Träger senkrecht zur Längsrichtung seitlich überragt. Dadurch ist eine besonders große Auflagefläche realisierbar. Der Auflagebereich dient der Aufbringung einer Klebeschicht zur Befestigung der Solarmodule.

Der Befestigungsbereich ist bevorzugt an der dem Auflagebereich abgewandten Seite des quaderförmigen Trägers angeordnet und als Befestigungsnut ausgebildet. Die Befestigungsnut ermöglicht in Zusammenwirkung mit dem in die Nut eingreifenden Klemmelement, welches im Wesentlichen eine U-förmige Gestalt aufweist, eine seitliche Fixierung des Profilelements und damit der Solarmodule. Dabei ist vorteilhafterweise vorgesehen, dass das Anschlagelement in der Befestigungsnut derart angeordnet ist, dass es im Wesentlichen senkrecht zum Nutboden und senkrecht zur Längsrichtung der Nut und des Profilelements positioniert ist. Auf diese Weise ist das Profilelement und mit diesem das Solarmodul in Dachgefällerichtung positionierbar und fixierbar.

Das Anschlagelement kann rein prinzipiell einen begrenzten Bereich der Nut ausfüllen. Eine besonders vorteilhafte Ausgestaltung sieht vor, dass das Anschlagelement die Nut in deren Längsrichtung verschließt, das heißt mit den beiden Nutwänden verbunden ist. Diese Ausführungsform ermöglicht eine besonders hohe Stabilität. Das Anschlagelement kann dabei die Nut überragen, das heißt über die Nut hervorstehen.

### Kurze Beschreibung der Zeichnungen

Ausführungsbeispiele der Erfindung sind in den Zeichnungen dargestellt und in der nachfolgenden Beschreibung näher erläutert.

Es zeigen:

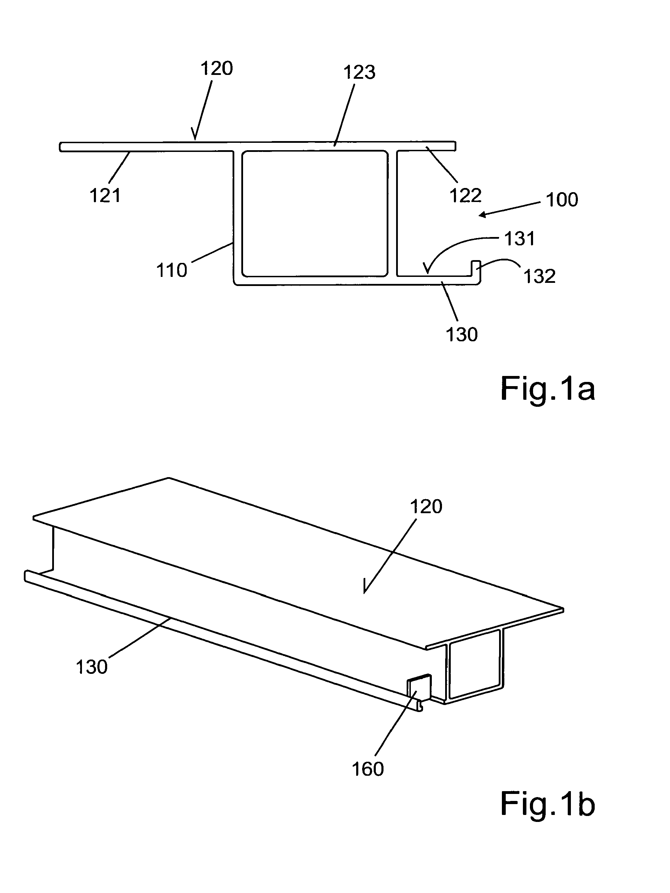

- Fig. 1a: schematisch eine Schnittdarstellung eines erfindungsgemäßen Profilelementes;
- Fig. 1 b: eine isometrische Darstellung des erfindungsgemäßen Profilelements;
- Fig. 2: in isometrischer Darstellung die Befestigung von Solarmodulen mittels des erfindungsgemäßen Profilelements auf einem Befestigungsprofil und
- Fig. 3: schematisch die Anordnung von Profilelementen an einem Solarmodul.

### Ausführungsformen der Erfindung

Ein als Ganzes mit 100 bezeichnetes Profilelement weist einen Träger 110 auf, der beispielsweise als im Querschnitt rechteckiges, insbesondere quadratisches, Rohr ausgebildet sein kann und insoweit eine quaderförmige Gestalt aufweist. An seiner Oberfläche weist der Träger 110 eine Auflagefläche 120 auf, die über den Träger 110 seitlich übersteht, wobei die Überstände 121, 122 unterschiedlich lang sein können, wie es in Fig. 1 a dargestellt ist. Auf seiner, dem Auflagebereich abgewandten Seite weist der Träger 110 einen Befestigungsbereich 130 auf, der beispielsweise als Befestigungsnut bestehend aus einem Nutgrund 131, dem Träger selbst und einem seitlich vorspringenden Rand 132 gebildet sein kann. Die Befestigungsnut 130 weist erfindungsgemäß einen Anschlag 160 auf, der von dem Nutgrund 131 im Wesentlichen senkrecht und ebenfalls im Wesentlichen senkrecht zur Längsrichtung des Profilelements absteht und so eine im Weiteren noch näher zu beschreibende Abrutschsicherung bildet.

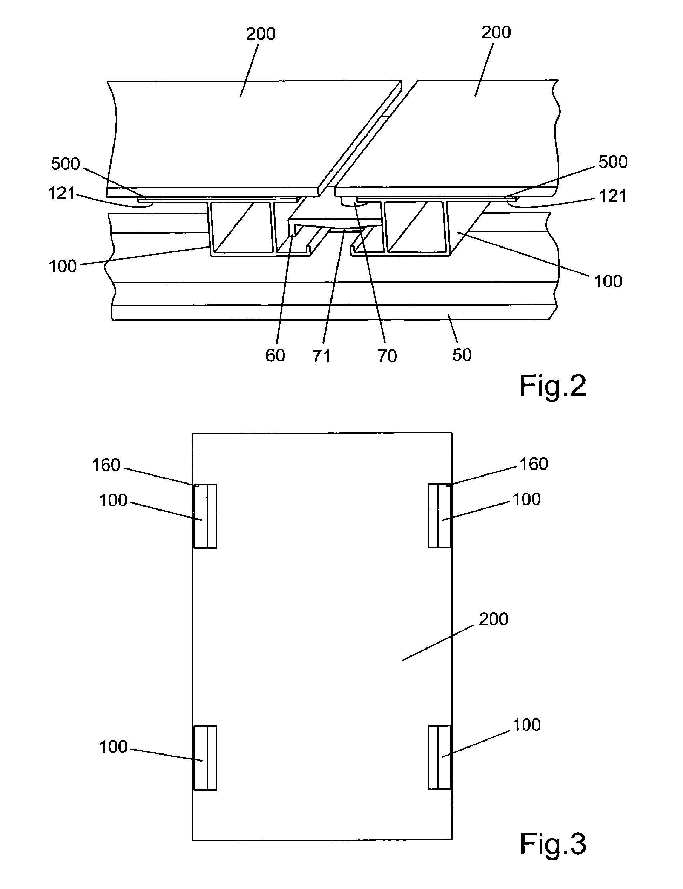

Auf dem Auflagebereich 120 des Trägers 100 wird mittels einer Klebschicht 500 (Fig. 2) wenigstens ein Solarmodul 200 befestigt, wobei das Solarmodul 200 zunächst vor der Montage auf dem Träger 100 befestigt wird. Der Träger 100 wird dann zusammen mit dem Solarmodul 200 auf einem an sich bekannten Befestigungsprofil 50 befestigt, wie es in Fig. 2 schematisch dargestellt ist. Die Befestigung erfolgt beispielsweise mittels einer in Fig. 2 nicht sichtbaren an sich bekannten sogenannten Käfigmutter und einer Schraube 70, die durch eine Schraubenfeder 71 federvorgespannt ist, mit Hilfe eines U-förmigen Klemmelements 60, welches simultan in zwei sich gegenüberliegende Befestigungsnuten 130 der Profilelemente 100 eingreift. Die Solarmodule 200 werden auf Dächern, die zum Teil eine nicht unerhebliche Dachschräge aufweisen, befestigt, wobei die Befestigungsprofile 100 zusammen mit den Solarmodulen 200 als jeweils ein Teil gehandhabt werden müssen. Dabei erfolgt die Befestigung so, dass die Profilelemente 100 beispielweise in Richtung des Dachgefälles angeordnet werden. Um ein Abrutschen zu verhindern, sieht nun die erfindungsgemäße Lösung vor, in dem Befestigungsbereich, also in der Nut 130 ein Anschlagelement 160 anzuordnen, welches senkrecht zur Längsrichtung des Profilelements 100 einen Anschlag bildet, an dem beispielsweise das U-förmige Klemmelement 60 zur Anlage kommt und so ein Abrutschen des Profilelements 100 und mit diesem der Solarmodule 200 verhindert wird.

Das Anschlagelement 160 steht beispielsweise wie in Fig. 1b dargestellt, senkrecht vom Nutgrund 131 und gleichzeitig im Wesentlichen senkrecht zur Längsachse des Profilelements 100 hervor, wobei es vorteilhafterweise mit der L-förmigen Abwinklung 132 der Befestigungsnut 130 verbunden und gleichzeitig auch mit dem Träger 100 verbunden ist, wodurch aufgrund dieses Verbunds eine besonders hohe Stabilität sichergestellt ist. Das Anschlagelement 160 verschließt damit gewissermaßen die Nut 130. Dabei kann auch vorgesehen sein, dass das Anschlagelement 160 die Nut überragt, das heißt über die Nut hervorsteht und so eine größere Fläche bildet als der Nutquerschnitt (Fig. 1b).

Durch das Anschlagelement 160 ist das Solarmodul 200 wesentlich einfacher zu handhaben, da ein Abrutschen während der Montage des Solarmoduls 200 auf Dächern, insbesondere auf Dächern mit großer Dachschräge, wirkungsvoll verhindert wird.

Fig. 3 zeigt schematisch die Anordnung von erfindungsgemäßen Profilelementen 100 an einem Solarmodul 200. Es werden im Wesentlichen vier derartige Profilelemente auf der Unterseite des Solarmoduls 200 angeordnet, von denen wenigstens zwei ein Anschlagelement 160, welches als Abrutschsicherung dient, aufweisen. Die Anschlagelemente 160 sind hierbei in Gefällerichtung vorzugsweise oben angeordnet.

## Patentansprüche

1. Profilelement (100) zur Befestigung von Solarmodulen (200), insbesondere Fotovoltaikmodulen, mit einem Träger (110), an dessen einer Seite ein, einem Solarmodul (200) zugewandter Auflagebereich (120) angeordnet ist und an dessen unterer, dem Solarmodul (200) abgewandten Seite ein Befestigungsbereich (130) angeordnet ist, **dadurch gekennzeichnet, dass** der Befestigungsbereich (130) wenigstens ein in Längsrichtung des Profilelements (100) wirkendes Anschlagelement (160) aufweist.

2. Profilelement (100) nach Anspruch 1, **dadurch gekennzeichnet, dass** der Träger (110) quaderförmig ausgebildet ist und einen rechteckigen, insbesondere quadratischen Querschnitt aufweist.

3. Profilelement (100) nach Anspruch 1, **dadurch gekennzeichnet, dass** der Auflagebereich (120) den Träger (110) senkrecht zur Längsrichtung des Profilelements (100) seitlich überragt.

4. Profilelement (100) nach Anspruch 1, **dadurch gekennzeichnet, dass** der Befestigungsbereich an der dem Auflagebereich (120) abgewandten Seite des quaderförmigen Trägers (110) angeordnet ist und als Befestigungsnut (130) ausgebildet ist.

5. Profilelement (100) nach Anspruch 4, **dadurch gekennzeichnet, dass** das Anschlagelement (160) in der Befestigungsnut (130) derart angeordnet ist, dass es im Wesentlichen senkrecht zum Nutboden (131) und senkrecht zur Längsachse der Nut und des Profilelements (100) positioniert ist.

6. Profilelement (100) nach Anspruch 5, **dadurch gekennzeichnet, dass** das Anschlagelement (160) die Nut (130) in deren Längsrichtung verschließt.

7. Profilelement (100) nach Anspruch 5, **dadurch gekennzeichnet, dass** das Anschlagelement (160) über die Nut (130) hervorsteht.

8. Profilelement (100) nach einem der vorstehenden Ansprüche, **dadurch gekennzeichnet, dass** der Auflagebereich (120) zur Aufbringung einer Klebeschicht vorgesehen ist.
